# EUROPEAN PATENT APPLICATION

(11) **EP 0 868 939 A1**
(43) Date of publication of application: **07.10.1998**
(21) Application number: 98870045.6
(22) Date of filing: 04.03.1998
(51) Int. Cl.: B01D 53/74, B01D 53/79, B01D 53/50, B01D 53/68

(54) **Device and process for flue gas purification by means of compressed air atomizers**

(30) Priority: 04.03.1997 BE 9700193
(71) Applicant: Seghersbetter technology for Solids + Air, 2830 Willebroek (BE)
(72) Inventor: Seghers, Hendrik, 1840 Malderen (BE)
(74) Representative: Quintelier, Claude

(57) **Abstract**

The invention relates to a device for a semi-wet purification of flue gases, which device comprises at least two compressed air atomizers (2, 12) for the atomization of reagents in the liquid state for reaction with the flue gases, which compressed air atomizers (2, 12) are connected to a pump unit (3) for the supply, with a predetermined flow rate to the compressed air atomizers (2, 12) of the reagents through a supply line (4), characterized in that each individual compressed air atomizer (2, 12) is connected to a corresponding individual pump unit (3, 13) through a corresponding individual supply line (4, 14).

## Description

This invention relates to a device for a semi-wet purification of flue gases, which device comprises at least two compressed air atomizers for atomizing liquid reagents for reaction with the flue gases, which compressed air atomizers are connected to a pump unit for the supply, with a predetermined flow rate, to the compressed air atomizers, of the reagents by a supply line.

The known device for the semi-wet purification of flue gases is mostly a reactor, comprising at the bottom side an entry for flue gases originating from a waste incineration process, and a distributor plate for the creation of a homogeneous flow pattern of the flue gases through the reactor. In the upper part of the device are a number of compressed air atomizers . These compressed air atomizers are provided for atomizing a liquid in the flue gases present in the reactor. The liquid comprises a mixture of reagents for reaction with the undesired components of the flue gases and the cooling of the flue gases, prior to sending the flue gases to a filter, to remove present particles, for example soot and dust, from the flue gases.

In the known device, the compressed air atomizers are applied in series on a central supply line for the reagents. A pump unit controls the flow rate and the pressure by which the reagents are supplied, through the central supply line, to the compressed air atomizers. For the efficiency of the atomization, and thus the flue gas purification, it is important that the flow rate supplied to each individual compressed air atomizer, lies within the design operation range of the compressed air atomizer. The design operation range of the compressed air atomizer corresponds to those flow rate values which provide a good atomization of the reagents. If the flow rate is too high, the compressed air atomizer is not capable of atomizing all the supplied liquid. If the flow rate is too low, a good atomization of the supplied liquid cannot be achieved.

The pressure, temperature and composition of the flue gases vary with the process conditions prevailing in the waste incineration process from which they originate.

The known device has the disadvantage that only the flow rate by which the liquid mixture of reagents is supplied, through the central supply line, to the sum of the compressed air atomizers, can be regulated. The flow rate reaching each individual compressed air atomizer is different, depending on the position of the compressed air atomizer on the central supply line, and cannot be controlled. Consequently, an irregular atomization is obtained, and a bad atomization through the compressed air atomizers, so that the liquids are not dosed as a fine mist to the flue gases, but indeed as too big liquid drops. Thereby, the first compressed air atomizer is for example supplied with a too high liquid flow rate, and the last compressed air atomizer with a too low liquid flow rate.

For the purification of flue gases which contain Cl⁻ and SO₂- ions, for example a liquid mixture of limemilk and water is used and is atomized in these flue gases. Limemilk is atomized for reaction with the Cl⁻ and SO₂- components; water is atomized to cool the flue gases before they leave the reactor.

It is the aim of this invention to provide a device in which it is possible to adjust the flow rate by which the reagents are supplied to the compressed air atomizers, separately for each compressed air atomizer.

This is achieved according to the invention, because each individual compressed air atomizer is connected to a corresponding individual pump unit, through a corresponding individual supply line.

Because the flow rate of each compressed air atomizer is separately adjustable, it is possible to use each individual compressed air atomizer within its design operation range, while each compressed air atomizer provides an optimum fine atomization of the reagents. Such a fine atomization also provides optimum reaction conditions, in order to allow a complete reaction of the reagents present in the mist with the flue gases. Moreover, with such an atomization, a smaller quantity of water will suffice, without thereby adversely influencing the completeness of the reaction. Since the flue gases mostly have a much higher temperature (for example 200 °C or more) than the liquid atomized through the compressed air atomizers, the liquid present in the mist is immediately evaporated, so that moreover no undesired waste water is formed.

Moreover, because each compressed air atomizer is used within its design operation range, a deposit of the suspended particles present in the reagents in, and an obstruction of the compressed air atomizers and the auxiliary supply lines is largely prevented.

In the device according to the invention, preferably the reagents differing from each other are atomized through different compressed air atomizers (2, 12).

In the known device, the reagents, for example limemilk and water, are premixed and subsequently, through the pump and the central supply line, supplied to the joint compressed air atomizers. Because the limemilk contains suspended lime particles, the pump shows a rapid wear, by which the water displaces the lime in the mixture, and the mixture of reagents leaving the pump does not have the desired composition.

With the device according to the invention it is possible to supply the device with a mixture of the desired composition.

In the device according to the invention, the device preferably comprises an automated control, for the regulation of the flow rate of the pump units.

Therefore, it is possible to regulate the flow rate of all pumps separately, and to adjust the quantity of the different reagents which are atomized in the device, to the composition, pressure and temperature of the flue gases originating from the waste incineration process. The temperature of the flue gas leaving the device can in this way always be maintained within predetermined limits, by atomizing more or less water. With a varying composition of the flue gases, the quantity of atomized reagents, for example limemilk, can be adjusted to the composition of the flue gas.

An example of a suitable automatic control is a computer provided with an executive programme, which for example changes the flow rate of the reagents as a function of the process conditions.

By choosing the diameter of the separate supply lines such, that they are suitable for the supply of those flow rate values which correspond with the design operation range of the compressed air atomizer corresponding with the supply line, it is possible to use each compressed air atomizer within its design operation range. Therefore, the deposit of particles suspended in the reagents, because the line and/or the compressed air atomizer cannot process the supplied flow rate, is largely avoided.

The device according to the invention preferably comprises at least 4 compressed air atomizers, which are essentially in a plane that is parallel to the upper surface, whereby a central compressed air atomizer is in the middle of said plane, and the other compressed air atomizers are proportionally spaced out in said plane.

By spacing out the compressed air atomizers proportionally in said plane, a proportional distribution of the reagents in the flue gases, and consequently an efficient reaction and a uniform cooling of the flue gases is obtained.

The central compressed air atomizer is preferably provided for the atomization of limemilk, the other compressed air atomizers are preferably provided for the atomization of water.

By atomizing limemilk centrally in the device, a deposit of lime on the walls of the device, and consequently a decreased efficiency of the flue gas purification and a pollution of the device are largely prevented.

Water can be atomized in any random place in the device. The compressed air atomizers for the water are preferably uniformly spaced out in said plane in the device, so that a uniform atomization of water and a uniform cooling of the flue gases is realized.

The compressed air atomizers for the water are preferably close to the wall of the device. Such an arrangement is cheap, since only a short supply line is needed to the compressed air atomizers for atomizing water.

The invention also relates to a process for the purification of flue gases, whereby two or more reagents are atomized for reaction with the flue gases.

In the known process, the reagents for the purification of the flue gases are premixed and the mixture is supplied with a predetermined flow rate, by means of a pump unit, through a central supply line, to the compressed air atomizers. The compressed air atomizers are applied in series on the central supply line.

This process has the disadvantage that the flow rate which reaches the successive compressed air atomizers, is different. The flow rate which reaches the first compressed air atomizer is mostly too high, so that it cannot atomize the whole flow rate. The surplus is supplied to the second compressed air atomizer, and subsequently to the next compressed air atomizers. The flow rate reaching the last compressed air atomizer is often too low, by which the compressed air atomizer "drips" and does not provide a good atomization.

With the process according to the invention, the separate reagents are atomized through separate compressed air atomizers.

Therefore, it is possible to adjust the flow rate that is supplied to each separate compressed air atomizer such, that the flow rate lies within the design operation range of the compressed air atomizer.

According to the invention, it is also possible to supply the separate compressed air atomizers with reagents differing from each other and having an equal or different flow rate.

Therefore, it is possible to realize an optimum distribution of the reagents in the flue gases and an optimum cooling of the flue gases, even if the concentration of the undesired components in the flue gases and the temperature of the flue gases vary within the reactor, so that an optimum purification of the flue gases is realized.

The flow rate of the'separate reagents is preferably adjusted to the quantity of flue gas in the device. This provides an efficient process in which the quantity of supplied reagents is sufficient for a complete purification of the flue gases, without having an excessive surplus or shortage of reagents.

The invention is further elucidated by means of the attached figures and figure description. The same reference numbers always refer to the same parts.

Figure 1 is a diagram of the known device.

Figure 2 is a top view of a device according to the invention.

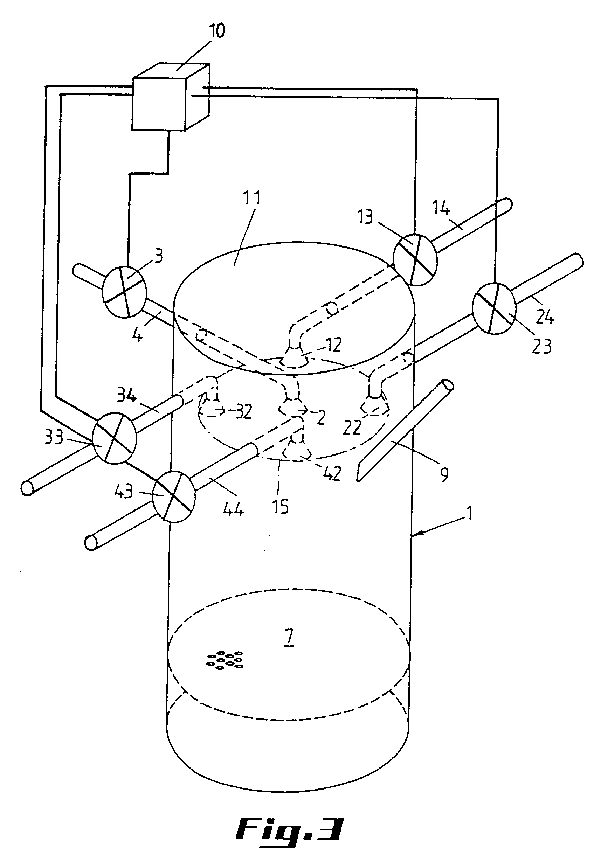

Figure 3 is a diagram of a device according to the invention.

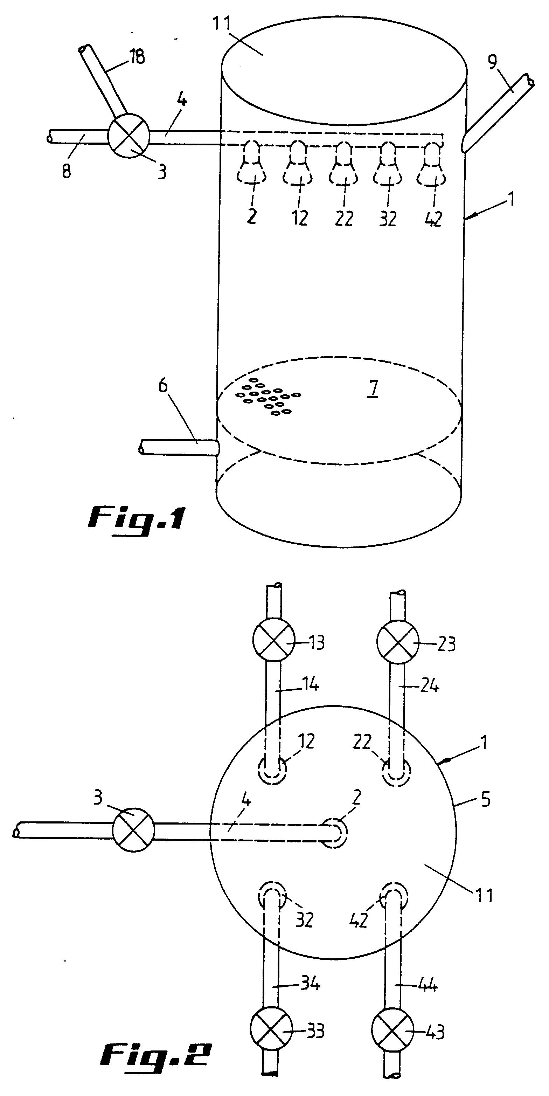

The known device shown in figure 1 comprises a reactor 1 for the purification of the flue gases, and a supply line 4 for the supply of the mixture of the reagents to the reactor 1. On the supply line 4 at least two compressed air atomizers 2 and 12 are applied in series, for the atomization in the reactor 1 of the mixture of the reagents. The supply line 4 is connected to a pump unit 3 for the regulation of the flow rate by which the mixture is supplied to the compressed air atomizers 2, 12. Supply lines 8 and 18 are provided for the supply of the different reagents to pump unit 3, which is also provided for the mixture of the reagents.

Thus for example water can be supplied through supply line 8, and limemilk through supply line 18, to the pump unit 3.

The device according to the invention shown in figure 2 comprises a reactor 1, for the purification of the flue gases. The reactor has a wall 5, an upper surface 11, and is preferably tubular. The reactor comprises at the bottom an inlet 6 for the supply of flue gases, a distributor plate 7 to realize a homogeneous flow pattern of the flue gases through the reactor, and an outlet 9 for the discharge of the purified, cooled flue gases to a filter, for the removal of dust particles present in the flue gases.

In the upper part of the reactor 1 preferably at least four compressed air atomizers 2, 12, 22, 32 are applied for the atomization in the reactor of the reagents. Each individual compressed air atomizer is connected to a corresponding individual pump unit 3, 13, 23, 33 through a corresponding individual supply line 4, 14, 24, 34. Preferably, the compressed air atomizers are essentially in a plane that is parallel to the upper surface 11. One compressed air atomizer 2 is preferably applied centrally in said plane 15, for the atomization of limemilk, for reaction with for example Cl⁻ and SO₂- ions in the flue gases. The other compressed air atomizers 12, 22 and 32 can be applied in any random position in the plane 15. The compressed air atomizers 12, 22 and 32 are preferably uniformly spaced out in said plane 15, and are preferably provided for the atomization of water to cool the flue gases.

The flue gases which are supplied through the inlet 6 to the reactor 1, comprise undesired components such as for example Cl⁻, SO₂-, heavy metals and dioxines. The temperature of the flue gases is mostly between 180 and 500 °C. In order to allow a complete conversion and a sufficient cooling of the flue gases, a sufficient quantity of limemilk and water has to be atomized in the reactor 1, and the flue gases must have a sufficiently long residence time in the reactor 1.

The flue gases originating from an incineration process, for example a domestic waste incineration process, are supplied to the compressed air atomizers with a well defined flow rate, which mostly varies with the process conditions in the incineration process. Limemilk is,supplied to the central compressed air atomizer 2 through supply line 4, with a flow rate which is preferably adjusted by an automated executive programme to the flow rate and composition of the flue gases, and which lies within the design operation range of the compressed air atomizer 2.

Limemilk is a suspension of 5-25 % slaked lime. The size of the suspended particles mostly varies from 5-20 mm. The suspended particles must be sufficiently small, so that they remain in suspension and can be atomized through the compressed air atomizer.

Water is supplied to the other compressed air atomizers 12, 22, 32, 42 through the respective supply lines 14, 24, 34, 44, with a flow rate which is preferably adjusted to the temperature of the flue gases. The flow rate is adjusted for each separate compressed air atomizer within its design operation range.

The purified flue gases leave the reactor 1 through the outlet 8.

It is of essential importance for the purification, that the reagents are finely atomized in the reactor to realize an optimum reaction with the flue gases and an optimum cooling. The particle size of the atomized reagents varies with the flow rate and the pressure, and is mostly 10-250 mm, preferably 30-100 mm.

The invention is not restricted to the above described embodiment. Thus, it is for example possible to vary the number of compressed air atomizers and their position and distribution in the device. The compressed air atomizers can be applied at heights differing from each other in the reactor, in such a way that they are not in one plane. The plane 15 does not have to be parallel to the upper surface 5. The compressed air atomizer(s) through which the limemilk is dosed, may in principle be randomly chosen.

### List of references

- 1: reactor
- 2: compressed air atomizer
- 3: pump unit
- 4: supply line
- 5: wall
- 6: inlet
- 7: distributor plate
- 8, 18: supply line
- 9: outlet
- 10: automated control
- 11: upper surface
- 12, 22, 32, 42: compressed air atomizer
- 13, 23, 33, 43: pump unit
- 14, 24, 34, 44: supply line
- 15: plane parallel to upper surface

## Claims

1. Device for the semi-wet purification of flue gases, which device comprises at least two compressed air atomizers (2, 12) for the atomization of liquid reagents for reaction with the flue gases, which compressed air atomizers (2, 12) are connected to a pump unit (3) for the supply with a predetermined flow rate to the compressed air atomizers (2, 12) of the reagents through a supply line (4), characterized in that each individual compressed air atomizer (2, 12) is connected to a corresponding individual pump unit (3, 13) through a corresponding individual supply line (4, 14).

2. Device according to claim 1, characterized in that the reagents differing from each other, are atomized through different compressed air atomizers (2, 12).

3. Device according to any one of claims 1 or 2, characterized in that the device comprises an automated control (10) for the regulation of the flow rate of the pump units (3, 13).

4. Device according to any one of claims 1 through 3, characterized in that the supply lines (4, 14) have a diameter such, that they are suitable for the delivery of predetermined flow rates, corresponding with a design operation range of the compressed air atomizers (2, 12) corresponding with the supply lines (4, 14).

5. Device according to any one of claims 1 through 4, whereby the device comprises an upper surface (11), characterized in that the device comprises at least 4 compressed air atomizers (2, 12, 22, 32), which are essentially in a plane (15) which is parallel with the upper surface (11), whereby a central compressed air atomizer (2) is located in the middle of said plane (15), and the other compressed air atomizers (12, 22, 32) are proportionally spaced out in said plane.

6. Device according to claim 5, characterized in that the device comprises 5 compressed air atomizers (2, 12, 22, 32, 42), of which a central compressed air atomizer (2) is located in the middle of said plane (15) and the other compressed air atomizers (12, 22, 32, 42) are proportionally spaced out in said plane (15).

7. Device according to any one of claims 5 or 6, characterized in that the central compressed air atomizer (2) is provided for the atomization of limemilk, and the other compressed air atomizers (12, 22, 32) are provided for the atomization of water.

8. Process for the purification of flue gases, whereby in the flue gases two or more reagents are atomized for reaction with a quantity of flue gases, characterized in that reagents differing from each other, are atomized through different compressed air atomizers (2, 12, 22, 32).

9. Process according to claim 8, characterized in that reagents differing from each other, are supplied with a different flow rate to the different compressed air atomizers (2, 12, 22, 32).

10. Process according to claim 9, characterized in that the flow rate of the reagents is adjusted to the quantity and composition of the flue gases.
